# EUROPÄISCHE PATENTANMELDUNG

(11) **EP 4 173 813 A1**
(43) Veröffentlichungstag der Anmeldung: **03.05.2023**
(21) Anmeldenummer: 22200572.0
(22) Anmeldetag: 10.10.2022
(51) Int. Cl.: B30B 9/02, B30B 9/22, B65D 90/00, B65D 90/54, B65D 90/58, B65D 90/62, F16J 13/00, F16J 13/02, F16J 13/06, F16J 13/14, F16J 13/16, B65D 43/22

(54) **VORRICHTUNG ZUM AUSPRESSEN VON FLÜSSIGKEITSHALTIGEM PRESSGUT**

(30) Priorität: 13.10.2021 DE 102021126523
(71) Anmelder: Willmes Anlagentechnik GmbH, 64653 Lorsch (DE)
(72) Erfinder: KRAMMER, Volker, 69469 Weinheim (DE); HELWIG, Daniel, 64653 Lorsch (DE)
(74) Vertreter: Kesselhut, Wolf

(57) **Zusammenfassung**

Eine Vorrichtung (1) zum Auspressen von flüssigkeitshaltigem Pressgut umfassend einen zylinderförmigen Pressbehälter (2) mit einer durch einen Deckel (3) verschließbaren Befüll- und Entleeröffnung (4), wobei der Deckel (3) in Umfangsrichtung des Pressbehälters (2) betrachtet aus einer geöffneten Stellung in eine Schließstellung bewegbar ist, in der die Befüll- und Entleeröffnung (4) vom Deckel (3) bedeckt ist, zeichnet sich dadurch aus, dass der Deckel (3) ein der Krümmung des Pressbehälters (2) von der Form her angepasstes, gewölbtes Metallblech (6) ist, das an seiner in Schließrichtung vorlaufenden Kante mit einer ersten Profilstange (10a) und an seiner in Schließrichtung nachlaufenden Kante mit einer zweiten Profilstange (10b) verbunden ist, die sich quer zur Bewegungsrichtung des Deckels (3) erstrecken, und dass an der Außenseite des Pressbehälters (2) Haltemittel (12, 14, 16, 18, 20) angeordnet sind, durch die die erste und zweite Profilstange (10a, 10b) in der Schließstellung mit einer in tangentialer Richtung wirkenden Haltekraft beaufschlagbar sind.

## Beschreibung

Die Erfindung betrifft eine Vorrichtung zum Auspressen von flüssigkeitshaltigem Pressgut, insbesondere von Trauben, die einen zylindrischen Pressbehälter mit einer durch einen Deckel verschließbaren Befüll- und Entleeröffnung umfasst, gemäß dem Oberbegriff von Anspruch 1.

Pressen zum Auspressen von flüssigkeitshaltigen Stoffen werden von der Anmelderin beispielsweise unter den Bezeichnungen Merlin^{®} oder Sigma^{®} vertrieben und werden dazu eingesetzt, den als Ausgangsstoff zur Weinherstellung verwendeten Traubensaft aus in die Presse eingefüllten Trauben herauszupressen. Bei den bekannten Pressen kommen verschiedene Verschlussmechanismen zum Einsatz.

Die DE 2 945 254A1 der Anmelderin offenbart eine gattungsgemäße Presse mit einem abnehmbaren Deckel, der zur Bereitstellung einer besonders großen Befüll- und Entleeröffnung aus mehreren einzelnen Deckelelementen besteht, was den Befüll- und Entleervorgang der Presse erleichtert. Allerdings ergibt sich bei dieser Presse das Problem, dass die Reinigung aufgrund der vielen Haken und Ösen, die zum Verschließen der Befüll- und Entleeröffnung benötigt werden, sehr aufwendig ist. Ein weiteres Problem der beschriebenen Presse ist darin zu sehen, dass der Deckel nicht für eine hermetisch dichte Abdichtung des Pressbehälters sorgt und die eigensteifen, und dadurch schweren Deckelelemente zur Freigabe der Befüll- und Entleeröffnung einzeln von Hand angehoben werden müssen.

Der bei den bekannten Membranpressen am häufigsten eingesetzte Verschlussmechanismus besteht aus einem in Längsrichtung des Pressbehälters verschiebbaren Deckel, der meist über einen Führungsmechanismus in horizontaler Richtung parallel zur Behälterlängsachse verschoben wird. Dadurch ist der Kraftaufwand bei manuellem Öffnen oder Schließen der Presse gegenüber beispielsweise einem abnehmbaren Deckel deutlich reduziert. Allerdings limitiert die Verschiebung in Längsrichtung des Pressbehälters die Größe der Befüll- und Entleeröffnung stark, da der Deckel auch im geöffneten Zustand der Presse am Umfang des Pressbehälters angeordnet ist und dort viel Platz einnimmt, der nicht für die Befüll- und Entleeröffnung bereitsteht. Dadurch ergibt sich das Problem, dass sich bei der Befüllung der Presse Schüttkegel bilden und die Presse somit nicht optimal befüllt werden kann. Die zuvor beschriebene Ausgestaltung des Deckels erschwert zudem die Reinigung des Pressmittelraums, da der Abstand zwischen der Deckelunterseite und der Mantelfläche des Pressbehälters nur sehr gering und damit schwer zugänglich ist. Bei den zuvor beschriebenen Pressen, die eine Befüll- und Entleeröffnung aufweisen, die sich in Längsrichtung nur über einen Teilabschnitt des Pressbehälters erstreckt, wird der Befüllvorgang üblicherweise mehrfach unterbrochen und der Pressbehälter um seine Längsachse rotiert, um der Bildung von Schüttkegeln entgegenzuwirken. Dadurch erhöht sich einerseits die Dauer des Befüllvorgangs beachtlich, und andererseits vermindert sich die Qualität des herausgepressten Safts, da dieser Vorgang zu auftretenden Scherkräften und Reibung zwischen den Trauben führt, die eine zusätzliche Trubbildung durch kleine abgelöste Fasern nach sich zieht.

Pressen, die mit einem Verschlussmechanismus, der den Deckel in umfänglicher Richtung öffnet bzw. schließt, ausgestattet sind, ermöglichen im Gegensatz zu den Pressen mit einem in Längsrichtung verschiebbaren Verschlussmechanismus zwar eine große Befüll- und Entleeröffnung, da der Deckel vollständig von der Befüll- und Entleeröffnung wegbewegt wird. Allerdings ist der Deckel bei den von der Anmelderin gefertigten Pressen aus einem eigensteifen Material gefertigt, da dieser die gesamten radial in den Deckel eingeleiteten Druckkräfte aufnehmen muss. Um die benötigte Eigensteifigkeit bereit zu stellen, sind eine erhöhte Wandstärke des Deckelmaterials und der Einsatz von zusätzlich eigenschweißten Verstärkungsrippen erforderlich, welche jedoch das Deckelgewicht in nachteiliger Weise erhöhen und eine aufwendige Verfahr-Mechanik erfordern, die sowohl störanfällig als auch teuer in der Herstellung und der Wartung ist. Aufgrund des vergrößerten Gewichts der in Umfangsrichtung verfahrbaren Deckel ist daher eine manuelle Betätigung bei größeren Pressen in der Regel nicht möglich, so dass die Deckel in aufwendiger Weise über Antriebe, beispielsweise Elektro- oder Pneumatikmotoren, verfahren werden.

Demgemäß ist es die Aufgabe der vorliegenden Erfindung, eine Vorrichtung zum Auspressen von flüssigkeitshaltigem Pressgut zu schaffen, welche das Vorsehen einer möglichst großen Befüll- und Entleeröffnung ermöglicht, die durch einen Deckel verschließbar ist, welcher ein im Vergleich zu den Pressen des Standes der Technik reduziertes Eigengewicht besitzt und der sowohl manuell, als auch automatisch betätigt werden kann.

Diese Aufgabe wird erfindungsgemäß durch eine Vorrichtung mit den Merkmalen von Anspruch 1 gelöst.

Die erfindungsgemäße Vorrichtung zum Auspressen von flüssigkeitshaltigem Pressgut, die nachfolgend auch als Presse bezeichnet wird, umfasst hierzu einen zylinderförmigen Pressbehälter mit einer durch einen Deckel verschließbaren Befüll- und Entleeröffnung. Diese erstreckt sich in Längsrichtung über nahezu die gesamte Länge des Pressbehälters. Im Inneren des Pressbehälters sind aus dem Stand der Technik bekannte Drainageelemente aufgenommen, durch die hindurch das Pressgut nach dem Verschließen der Einfüllöffnung mittels einer pneumatisch betätigten Pressmembran in bekannter Weise ausgepresst wird.

Erfindungsgemäß umfasst der Deckel ein der Krümmung des Pressbehälters von der Form her angepasstes Metallblech aus einem dünnwandigen, zugfesten Werkstoff, das zum Verschließen des Pressbehälters aus einer geöffneten Stellung in Umfangsrichtung in eine Schließstellung bewegbar ist. Dazu sind am Pressbehälter und/oder am Metallblech Haltemittel angeordnet, die das Metallblech in der Schließstellung am Umfang des Pressbehälters mit einer in tangentialer Richtung auf die vor- und nachlaufende Kante wirkenden Haltekraft, bzw. Spannkraft beaufschlagen. Diese beaufschlagt die jeweilige Kante des Metallblechs bevorzugt gleichmäßig über ihre gesamte Länge der Kante hinweg mit der in tangentialer Richtung wirkenden Zugkraft, die das Metallblech, welches auch als Abdeckelement bezeichnet wird, zunächst am Umfang des Pressbehälters fixiert und nach dem Expandieren einer zwischen der Behälteraußenseite und der Innenseite des Metallblechs vorgesehenen Dichtung, auf die nachfolgend noch näher eingegangen wird, in tangentialer Richtung spannt.

Bei dünnwandigen zylinderförmigen Druckbehältern ist besonders die Stabilität und Zugfestigkeit des Materials in umfänglicher Richtung relevant, da die in dieser Richtung wirkenden Kräfte größer sind als die in Längsrichtung wirkenden Kräfte. Wie von der Anmelderin erkannt wurde, werden durch die Haltemittel, die bevorzugt formschlüssig mit der in der Schließrichtung vor- und/oder nachlaufenden Kante des Metallblechs in Eingriff gebracht werden, die in tangentialer Richtung zum Behälterumfang wirkenden Kräfte vom Deckel auf die Wand des Pressbehälters übertragen.

Nach einem der Erfindung zugrunde liegenden Gedanken besteht das Metallblech aus einem rundgewalzten, verstärkungsrippenlosen Blech, insbesondere Stahlblech, dessen Dicke der Wandstärke des Pressbehälters entspricht. Dies hat den Vorteil, dass sich der Pressbehälter im verschlossenen Zustand gleichmäßig dem Innendruck anpasst und außerdem keine wie im Stand der Technik verwendeten eigensteifen Rippen erforderlich sind, die den Deckel verstärken, damit dieser den einwirkenden Druckkräften von z.B. 1,2 bar standhalten kann, die während des Pressvorgangs von innen her auf das Pressgut und den Deckel wirken.

Um das Metallblech formschlüssig mit einer entsprechenden Spannkraft, bzw. Haltekraft zu beaufschlagen, ist es nach einem weiteren der Erfindung zugrunde liegenden Gedanken vorgesehen, dass die Haltemittel eine erste und zweite Profilstange umfassen. Hierbei ist das Metallblech an seiner in Schließrichtung vorlaufenden Kante mit der ersten Profilstange und/oder in seiner in Schließrichtung nachlaufenden Kante mit der zweiten Profilstange verbunden, die sich bevorzugt über die gesamte Breite des Metallblechs und auch der Befüll- und Entleeröffnung jeweils quer zur Bewegungsrichtung des Metallblechs erstrecken. Die Haltemittel umfassen bevorzugt einen an der Außenseite des Pressbehälters nahe der Befüll- und Entleeröffnung befestigten Haltewinkel, in dem die erste Profilstange in der Schließstellung des Metallblechs erfindungsgemäß derart aufnehmbar ist, dass sich die Profilstange über ihre gesamte Länge hinweg formschlüssig am Haltewinkel abstützt.

Die Haltemittel umfassen ferner bevorzugt ein drehbar gelagertes Klemmprofil, welches dem Haltewinkel gegenüberliegend angeordnet ist. Dieses kann insbesondere ein abgeflachter Rundstab sein, der manuell oder motorisch rotierbar ist und in der Schließstellung die erste Profilstange gegen den Haltewinkel drückt. Durch diese Konstruktion wird das Metallblech über die daran befestigte Profilstange fest mit dem Haltewinkel und dem Klemmprofil gekoppelt und kann durch Rotieren des Klemmprofils freigegeben werden, um das Metallblech anschließend aus der Schließstellung in Umfangsrichtung von der Befüll- und Entleeröffnung weg in eine Öffnungsstellung zu bewegen, in der die Befüll- und Entleeröffnung vollständig freigegeben ist.

Um das Klemmprofil in der Schließposition des Metallblechs/Abdeckelements zu rotieren, ist dieses bevorzugt drehbar in zwei Haltebuchsen am Umfang des Pressbehälters gelagert und weist einen drehfest mit dem Klemmprofil verbundenen Hebel auf, mittels welchem das Klemmprofil um seine Längsachse aus einer Freigabestellung in eine Verriegelungsposition verdreht werden kann. In der Freigabestellung ist der im Querschnitt zurückgenommene abgeflachte Bereich des Klemmprofils der Innenseite des oberen Schenkels des Haltewinkels zugewandt, so dass der Zwischenraum zwischen diesen eine lichte Weite aufweist, die größer ist, als der Durchmesser der ersten Profilstange. Hierdurch kann die erste Profilstange ungehindert durch den zwischen der Innenseite des oberen Schenkels und dem abgeflachten Bereich des Klemmprofils begrenzten Zwischenraum hindurchtreten, sodass das Metallblech entlang der Führungselemente umfänglich aus der Schließposition heraus in die Befüllposition verfahren werden kann, in der die Befüll- und Entleeröffnung vollständig freigegeben ist.

In der Verriegelungsstellung des Klemmprofils ist der abgeflachte Bereich des Klemmprofils hingegen der Innenseite des radial verlaufenden Schenkels des Halteprofils zugewandt. Hierdurch wird die lichte Weite des Zwischenraum zwischen der Halteleiste und dem Haltewinkel auf ein Maß verringert, das kleiner ist als der Durchmesser der ersten Profilstange, sodass diese zwischen der innenliegenden Fläche des oberen, tangential verlaufenden Schenkels des Haltewinkels und der Außenseite des nicht abgeflachten konvexen Abschnitts des Klemmprofils verklemmt wird. In dieser Stellung stützt sich das Klemmprofil zur Einleitung der Spannkraft mit einem dem abgeflachten Abschnitt gegenüberliegenden Teil seines konvexen Außenabschnitts am Stützprofil ab, so dass die tangential auf die vorlaufende erste Profilstange wirkende Spannkraft in die Wand des Pressbehälters eingeleitet wird.

Bei dieser Ausführungsform der Erfindung kann es weiterhin vorgesehen sein, dass an der Außenseite des Pressbehälters ein orthogonal zur Längsachse des Klemmprofils verschiebbarer, bevorzugt federbelasteter Rastbolzen aufgenommen ist, welcher mit seinem einen Ende in eine in der Außenseite des Klemmprofils geformte umfängliche Nut eingreift, um das Klemmprofil in Umfangsrichtung rotierbar und in der axialen Richtung ortsfest in den Haltebuchsen zu fixieren. Durch Zurückziehen des Rastbolzens ist es bei dieser Ausführungsform der Erfindung möglich, das gesamte Klemmprofil axial aus den Haltebuchsen herauszuziehen, oder in diese einzuführen. Dadurch ist der unter dem Haltewinkel geformte Hohlraum beispielsweise zu Reinigungszwecken leicht zugänglich, und das Klemmprofil kann darüber hinaus separat gereinigt werden.

Bei der bevorzugten Ausführungsform der Erfindung umfassen die Haltemittel weiterhin ein Stützprofil, welches bevorzugt an einem um die Befüll- und Entleeröffnung herum angeordneten Kragen des Pressbehälters aufgenommen ist. Dieses beaufschlagt das Klemmprofil in der Schließstellung des Metallblechs im Wesentlichen über die gesamte Länge der Deckelöffnung hinweg mit einer Stützkraft, so dass die Tangentialkräfte, die auf das während des Pressvorgangs gespannte Metallblech wirken, in vorteilhafter Weise in den Mantel des Pressbehälters eingeleitet werden.

Obgleich das Klemmprofil die erste Profilstange nach dem Rotieren derselben in die Verriegelungsstellung vor der Beaufschlagung des Innenraums des Pressbehälters mit Überdruck auch lediglich lose zwischen dem Haltewinkel und dem Klemmprofil mechanisch fixieren kann, und die Tangentialkräfte erst durch das Aufblasen der Deckeldichtung, bzw. die Beaufschlagung des Behälterinnenraums mit Druck erzeugt werden, kann es ebenfalls vorgesehen sein, dass die erste Profilstange - und über diese das Metallblech - durch eine entsprechende exzentrische Drehaufnahme des Klemmprofils bereits von vorn herein mit einer tangential wirkenden Vorspannkraft beaufschlagt werden, wenn das Klemmprofil in die Verriegelungsstellung rotiert wird.

Nach einem weiteren der Erfindung zugrunde liegenden Gedanken können die Haltemittel eine Vielzahl von reihenförmig im Abstand zueinander angeordneten Ausbrüchen umfassen, welche auf der der Schließrichtung gegenüberliegenden Seite des Metallblechs in diesem geformt sind. In diese Ausbrüche greifen den jeweiligen Ausbrüchen zugeordnete Haken formschlüssig ein, die bei der bevorzugten Ausführungsform der erfindungsgemäßen Vorrichtung an einer sich parallel zur nachlaufenden Kante des Metallblechs ersteckenden und am Pressbehälter aufgenommenen Hakenleiste angeordnet sind. Durch die auf beiden Seiten in umfänglicher Richtung angeordneten und auf die vorlaufende und nachlaufende Kante des Metallblechs wirkenden Haltemittel wird das Metallblech an seiner nachlaufenden Kante formschlüssig mit dem Pressbehälter verbunden und auf dessen Umfangsoberfläche gehalten.

Nach einem weiteren der Erfindung zugrunde liegenden Gedanken ist das Metallblech entlang von am Behältermantel aufgenommenen oder an diesem geformten Führungselementen verfahrbar, die bevorzugt als in der Schließ- bzw. Öffnungsrichtung umfänglich verlaufende Vorsprünge ausgeführt sind, in denen jeweils ein vorlaufender und ein nachlaufender Führungsschlitz geformt sind, in dem die gegenüberliegenden Endabschnitte der ersten und zweiten Profilstange entlanggeführt werden, wenn das Metallblech in Umfangsrichtung über die Befüll- und Entleeröffnung verfahren wird.

Durch die Führungselemente, in denen die Führungen bevorzugt als Schlitze ausgeführt sind, wird in vorteilhafter Weise sichergestellt, dass das Metallblech während seiner Bewegung von der Freigabestellung in die Schließstellung in einem hinreichenden Abstand von der Außenseite des Pressbehälters, insbesondere von der expandierbaren Deckeldichtung verfahren und beim Erreichen der Schließstellung auf die Oberseite des Behälters, bzw. des Kragens abgesenkt wird und formschlüssig schließt. Erfindungsgemäß werden die Endabschnitte der ersten und zweiten Profilstange beim Verschieben des Metallblechs in die Schließstellung durch jeweils ein erstes und zweites beiderseits der Befüll- und Entleeröffnung angeordnetes Führungselement geführt. Jedes der beiden Führungselemente unterteilt sich in einen ersten vorlaufenden Führungsabschnitt zum Führen der ersten vorlaufenden Profilstange und einen sich an diesen anschließenden, die zweite Profilstange führenden, zweiten nachlaufenden Führungsabschnitt, der jeweils als ein der gewünschten Kurvenform entsprechender bogenförmiger Schlitz ausgeführt ist, in welchem die einander gegenüberliegenden Endabschnitte der jeweiligen ersten und zweiten Profilstange aufgenommen sind.

Nach einem weiteren der Erfindung zugrunde liegenden Gedanken kann der erste Führungsabschnitt eine erste in Schließrichtung vorlaufende, radial zurück versetzte Führungsfläche und eine zweite in Schließrichtung nachlaufende radial herausgestellte Führungsfläche besitzen. Der jeweils erste Führungsabschnitt der beiden Führungselemente, die bevorzugt identisch ausgebildet sind, sorgt dafür, dass die erste Profilstange in der Schließstellung formschlüssig mit dem Klemmprofil in Kontakt kommt und in der Öffnungsstellung radial herausgestellt wird, sodass das Metallblech nicht mit der Dichtung der Befüll- und Entleeröffnung in Kontakt gelangt. Hierdurch wird ein übermäßiger Verschleiß, bzw. eine Beschädigung der Dichtung, die auch als Deckeldichtung bezeichnet wird, in vorteilhafter Weise vermieden.

Der zweite nachlaufende Führungsabschnitt eines jeden Führungselements besitzt bevorzugt eine erste radial zurückgenommene in Schließrichtung vorlaufende Führungsfläche, eine sich an diese anschließende zweite, radial herausgestellte mittlere Führungsfläche und eine sich an die zweite, radial herausgestellte mittlere Führungsfläche anschließende radial zurückgenommene nachlaufende Führungsfläche. Dadurch wird die zweite Profilstange in der Schließstellung derart positioniert, dass die an der Hakenleiste angeordneten Haken der Haltemittel in die im Metallblech geformten Ausbrüche eingreifen und dadurch das Metallblech in der Schließstellung auf der in Schließrichtung betrachtet nachlaufenden Seite formschlüssig am Umfang des Pressbehälters halten. Wird das Metallblech aus der Schließstellung in die Öffnungsstellung verfahren, erfüllt die zweite radial herausgestellte Führungsfläche des zweiten nachlaufenden Führungsabschnitts die Funktion, dass sich das Metallblech mit seiner in Schließrichtung betrachtet nachlaufenden Seite über die Hakenleiste sowie die in diesem Falle nicht expandierte Dichtung, welche die Befüll- und Entleeröffnung umgrenzt, in einem ausreichenden Abstand von z.B. 10 mm hinweg bewegt. Hierdurch wird ein direkter Kontakt der Unterseite des Metallblechs mit der an der Außenseite des Pressbehälters bevorzugt in einem Kragen angeordneten Deckeldichtung vermieden, welcher zu einer übermäßigen Abnutzung der Dichtung führen würde.

Bei der zuletzt beschriebenen Ausführungsform ist es zur Verringerung der Reibung bevorzugt vorgesehen, dass das Metallblech mittels Gleitsteinen oder Rollen entlang der Führungsflächen geführt wird, die durch die innenliegenden Ränder der zuvor erwähnten kurvenförmigen Führungsschlitze definiert werden.

Darüber hinaus ist es bei der bevorzugten Ausführungsform der Erfindung vorgesehen, dass zur Abdichtung des Innenraums des Pressbehälters gegenüber dem Metallblech in der Schließstellung am Kragen des Pressbehälters eine zuvor bereits erwähnte aufblasbare Dichtung angeordnet ist. Besonders bevorzugt ist die Dichtung ein umlaufend geschlossenes expandierbares Hohlprofil aus einem gummielastischen Werkstoff, dessen nach außen hin abgeschlossener Hohlraum über entsprechende Druckluftzuleitungen in der Schließstellung mit einem Druckgas, insbesondere Druckluft, beaufschlagbar ist. Durch Einleiten der Druckluft weitet sich der Außendurchmesser des im Querschnitt bevorzugt rechteckigen endlosen Hohlprofils auf und drängt dessen Außenseite gegen die Unterseite des Metallblechs, die Außenoberfläche des Pressbehälters, sowie die Innenflächen zweier an der Außenseite des Pressbehälters geformter parallel zueinander verlaufender endloser Wände, zwischen denen das Hohlprofil gegen eine laterale Verschiebung gesichert angeordnet ist, welche die Befüll- und Entleeröffnung umgeben. Hierdurch wird eine formschlüssige Anlage des Hohlprofils zwischen der Innenfläche des Metallblechs und der Außenseite des Pressbehälters ermöglicht, die den Pressmittelraum während des Pressvorgangs hermetisch gegenüber der Umgebung abdichtet. Dabei verlaufen der Grund und die beiden oberen Kanten einer jeden Endloswand bevorzugt im Wesentlichen parallel zu der zylindrisch gekrümmten Außenoberfläche des Pressbehälters, so dass das die Oberseite des Hohlprofils im nicht expandierten Zustand in einem möglichst konstanten Abstand von z.B. 2,5 mm bis 10 mm von der Unterseite des Metallblechs entfernt verläuft. Hierdurch ergibt sich der Vorteil, dass sich das Hohlprofil nach dem Expandieren in der Schließstellung bei verriegeltem Klemmprofil gleichförmig an die Unterseite des Metallblechs anlegt und dieses am Umfang des Pressbehälters mit zunehmendem Druck spannt, wobei die dadurch entstehenden Zugkräfte im Metallblech erfindungsgemäß als Tangentialkräfte in die Wand des Pressbehälters eingeleitet werden.

Nach einem weiteren der Erfindung zugrunde liegenden Gedanken ist das Klemmprofil orthogonal zur Bewegungsrichtung des Metallblechs aus den beiden Führungselementen entnehmbar. Hierbei kann es im Hinblick auf eine vereinfachte Reinigung des Pressbehälters und des Deckels vorgesehen sein, dass das Metallblech manuell lösbar an den Führungselementen aufgenommen ist. Dazu können die Gleitsteine und/oder Rollen, welche an der in Schließrichtung vorlaufenden ersten Profilstange befestigt sind, bevorzugt im geöffneten Zustand des Metallblechs manuell außer Eingriff mit den Führungsflächen gebracht werden, sodass das Metallblech vom Behälter abgenommen und/oder von diesem weg verschwenkt werden kann. Dabei ergibt sich im Gegensatz zu den herkömmlichen Pressen mit massiven verstärkten Metalldeckeln der Vorteil, dass das Metallblech aufgrund seines vergleichsweise geringen Gewichts auf einfache Weise durch Lösen von lediglich einer der Führungsstangen durch die andere Führungsstange am Umfang des Pressbehälters gehalten, und nur das freie Ende des Metallblechs soweit von diesem weg verschwenkt werden kann, bis die Unterseite des Metallblechs zu Reinigungszwecken zugänglich ist. Weiterhin kann es insbesondere bei sehr großen Pressen von Vorteil sein, wenn diese einen Verfahrmechanismus zum Verfahren des Metallblechs besitzen. Hierzu kann ein an den in Umfangsrichtung verlaufenden Seiten des Metallblechs befestigtes endloses Zugmittel vorgesehen sein, insbesondere ein Seil, ein Riemen oder eine Kette, welches über an der Außenseite des Pressbehälters aufgenommene Umlenkrollen geführt ist. Aufgrund des geringen Gewichts und den am Pressbehälter angeordneten Führungselementen, in welchen das Metallblech mittels der Gleitsteine bzw. Rollen mit einem vergleichsweise geringen Kraftaufwand präzise bewegt werden kann, ist es möglich, das Metallblech manuell und ohne großen Kraftaufwand von Hand zu verschieben. Dennoch kann es alternativ vorgesehen sein, dass der Verfahrmechanismus einen auf das endlose Zugmittel wirkenden Antrieb umfasst, um den gesamten Pressvorgang automatisieren zu können. Der Antrieb, der insbesondere ein Druckluftmotor oder ein Pneumatikmotor sein kann, bewegt hierbei das über die Umlenkrollen geführte Zugmittel in einem Abschnitt bevorzugt linear, und verfährt auf diese Weise das am Zugmittel rein mechanisch befestigte Metallblech aus der Schließposition in die Öffnungsposition/Befüllposition und umgekehrt.

Die Erfindung wird nachfolgend unter Bezugnahme auf die Figuren 1 bis 5 anhand bevorzugter Ausführungsformen beschrieben. In den Zeichnungen zeigen:
- Fig. 1: eine schematische Darstellung der erfindungsgemäßen Vorrichtung,
- Fig. 2: eine teilweise Explosionsdarstellung des Pressbehälters mit abgenommenem Deckel,
- Fig. 3: eine Schnittdarstellung der erfindungsgemäßen Vorrichtung entlang der Behälterquerachse,
- Fig. 4: eine vergrößerte Darstellung des Pressbehälters einer erfindungsgemäßen Vorrichtung mit vollständig entferntem Deckel,
- Fig. 5: eine schematische Darstellung des Verfahrmechanismus einer bevorzugten Ausführungsform der erfindungsgemäßen Vorrichtung, und
- Fig. 6: eine schematische Darstellung des Pressbehälters mit weggeschwenktem Deckel.

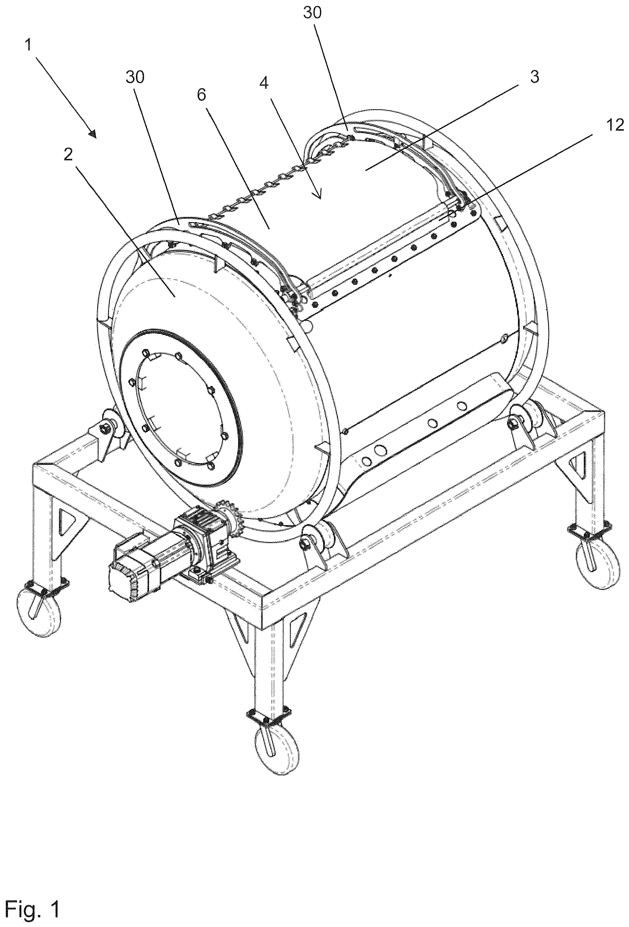

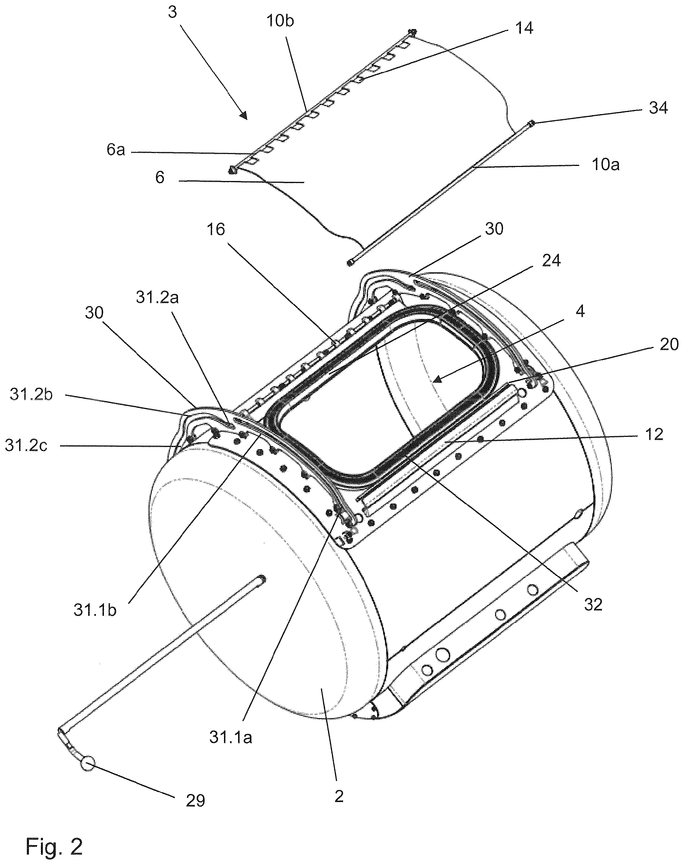

Figur 1 zeigt eine schematische Darstellung einer Presse mit einem umfänglich um einen zylinderförmigen Pressbehälter 2 aus einer Öffnungsstellung in eine Schließstellung verschiebbaren Deckel 3. Der zylinderförmige Pressbehälter 2 ist auf einem bevorzugt verfahrbaren Grundgestell auf Rollen gelagert angeordnet, über welche er während des Pressvorgangs über einen nicht näher bezeichneten Antriebsmotor in bekannter Weise um die Behälterlängsachse rotierbar ist. Der Deckel 3, welcher sich in der Abbildung von Fig. 1 in der geschlossenen Stellung befindet, besteht aus einem der Krümmung des Pressbehälters 2 angepassten Metallblech 6, welches aus einem dünnwandigen, zugfesten Werkstoff, insbesondere Edelstahl, gefertigt ist. Bei der bevorzugten Ausführungsform der Erfindung ist das Metallblech 6 ein rundgewalztes Blech aus Stahl mit einer Dicke, die im Wesentlichen der Wandstärke des Pressbehälters 2 entspricht. Das Metallblech 6 ist in Umfangsrichtung aus einer in Fig. 2 gezeigten geöffneten Stellung, die auch als Befüllstellung bezeichnet wird, in eine in Fig. 1 dargestellte Schließstellung bewegbar, in der die Befüll- und Entleeröffnung 4 zur Durchführung des Pressvorgangs durch das Metallblech verschlossen wird.

Um den Pressbehälter 2 mit dem Deckel 3 zu verschließen, sind am Pressbehälter 2 Haltemittel angeordnet, welche in der Schließstellung formschlüssig mit der vor und nachlaufenden Kante des Metallblechs 6 in Eingriff gebracht werden. Durch die Haltemittel, die nachfolgend noch näher beschrieben werden, wird das Metallblech 6 beim Pressen des Pressguts in der Schließstellung am Umfang des Pressbehälters 2 mit einer in tangentialer Richtung auf die vor- und nachlaufende Kante wirkenden Spannkraft beaufschlagt.

In Figur 2 ist eine bevorzugte Ausführungsform der erfindungsgemäßen Vorrichtung 1 mit abgenommenem Deckel 3 dargestellt. Durch die vorteilhafte Ausführungsform ergibt sich eine besonders große Befüll- und Entleeröffnung 4, die sich fast über die gesamte Länge des Pressbehälters 2 erstreckt. Somit wird der Befüll- und Entleervorgang beim Pressen sowohl beschleunigt als auch dahingehend optimiert, dass die Neigung zur Bildung von Schüttkegeln beim Einfüllen des Pressguts in den Pressmittelraum vermindert wird. Das Pressgut besteht bevorzugt aus Trauben, kann jedoch auch aus Früchten wie Äpfeln, Birnen oder auch Beeren bestehen.

Durch die Reduzierung der Schüttkegelbildung ergibt sich der Vorteil, dass ein hierzu bei herkömmlichen Pressen typischerweise durchgeführtes Rotieren des Pressbehälters 2 während des Befüllens oder Entleerens entfallen kann, wodurch sich die Zeitdauer zum Befüllen des Pressbehälters 2 erheblich reduziert.

Die Haltemittel umfassen eine in den Figuren 1, 2 und 3 dargestellte, in Schließrichtung vorlaufende und nachlaufende Profilstange 10a, 10b, welche mit den zugehörigen vorlaufenden und nachlaufenden Kanten des Metallblechs 6 jeweils bevorzugt durch Verschweißen verbunden ist. Die erste vorlaufende Profilstange 10a und die zweite nachlaufende Profilstange 10b erstrecken sich hierbei quer zur Bewegungsrichtung des Metallblechs 6, wie dies in Fig. 2 angedeutet ist.

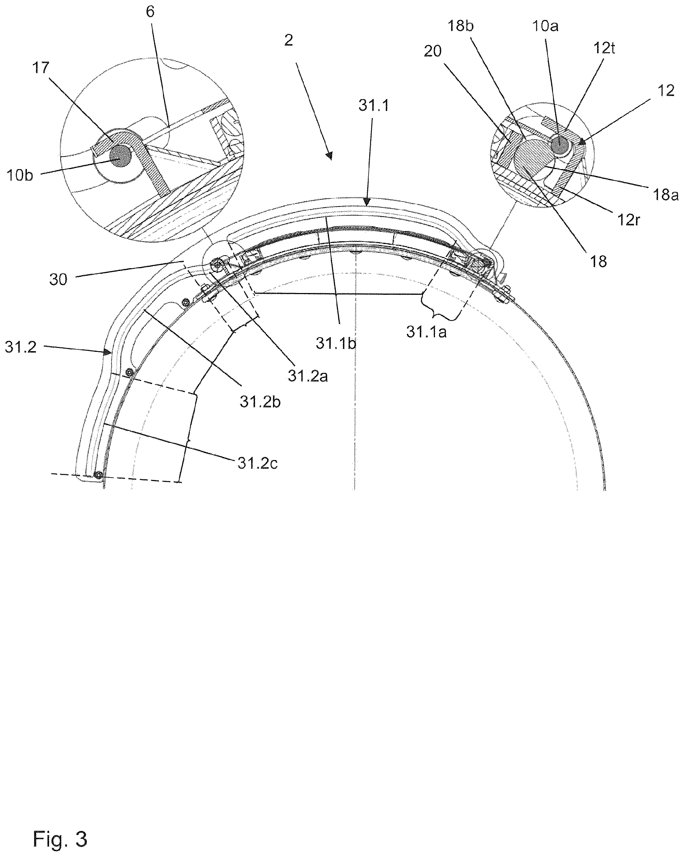

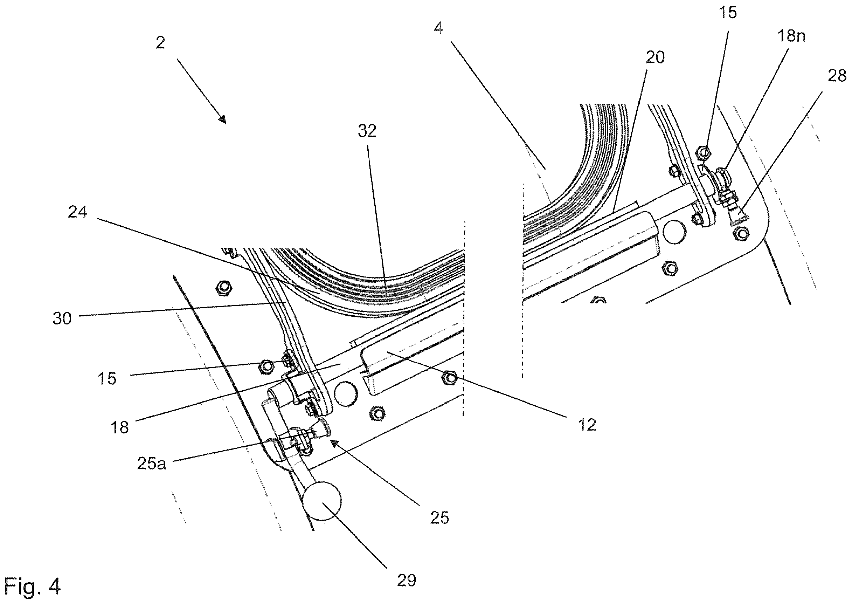

Die Haltemittel umfassen weiterhin einen Haltewinkel 12, in welchem die in Schließrichtung vorlaufende erste Profilstange 10a zum Verschließen des Pressbehälters 2 aufgenommen und in diesem durch ein rotierbar gelagertes Klemmprofil 18 fixiert werden kann, welches in dem vergrößerten Ausschnitt der Schnittdarstellung von Figur 3 erkennbar ist. Das Klemmprofil 18 ist bevorzugt als abgeflachter Rundstab ausgeführt, welcher an seinen Enden um seine Längsachse rotierbar in Haltebuchsen 15 an der Außenseite des Pressbehälters 2 gelagert ist und durch einen an diesem befestigten Handhebel 29 aus der in Fig. 3 und 4 gezeigten Verriegelungsstellung in eine nicht näher gezeigte Freigabestellung rotiert werden kann. Gemäß der vergrößerten Detaildarstellung von Fig. 2 besitzt das Klemmprofil 18 einen konvexen Abschnitt 18b und einen radial zurück genommenen abgeflachten Abschnitt 18a, die mit den Innenflächen eines radial und tangential verlaufenden Schenkels 12r, 12t des Haltewinkels 12 zusammenwirken, derart, dass die lichte Weite zwischen dem abgeflachten Abschnitt 18a des Klemmprofils 18 größer ist als der Durchmesser der ersten Profilstange 10a. Dadurch ist diese in der Freigabestellung des Klemmprofils 18 durch den Zwischenraum hindurch entnehmbar ist, so dass das Metallblech 6 am Umfang des Pressbehälters 2 entlang aus der Schließstellung in die Öffnungsstellung verfahren werden kann, um das Pressgut durch die Befüll- und Entleeröffnung in den Pressbehälter 2 einzufüllen, bzw. nach einem Pressvorgang aus diesem zu entnehmen.

Um die erste Profilstange 10a in der Verriegelungsstellung des Metallblechs 6, insbesondere während des Pressvorgangs, erfindungsgemäß am Umfang des Pressbehälters 2 zu fixieren, wird der Zwischenraum zwischen der Innenfläche des zweiten tangential verlaufenden Schenkels 12t des Haltewinkels 12 und dem konvex, insbesondere im Querschnitt kreisbogenförmig gekrümmten Abschnitt 18b des Klemmprofils 18 nach einem motorischen oder manuellen Rotieren des Klemmprofils 18 soweit verringert, dass dessen lichte Weite kleiner ist als der Durchmesser der mit dem Metallblech 6 fest verbundenen vorlaufenden ersten Profilstange 10a. Dadurch wird diese zwischen dem konvexen Abschnitt 18b und dem tangential verlaufenden Schenkel 12t des zur ersten Profilstange 10a hin offenen Haltewinkels 12 verklemmt, wie dies in Fig. 3 angedeutet ist. Um beim Beaufschlagen des Pressbehälters 2 mit Druck, bzw. beim Expandieren der Deckeldichtung die vom Pressgut, bzw. der Deckeldichtung auf die Innenseite des Metallblechs 6 ausgeübten radialen Druckkräfte, die vom Metallblech 6 in auf dessen Enden wirkende tangentiale Zugkräfte umgewandelt werden, zuverlässig in den Pressbehälter 2 einzuleiten, stützt sich das Klemmprofil 18 zusätzlich an einem an der Außenseite des Pressbehälters 2 befestigten Stützprofil 20 ab, welches sich bevorzugt über die gesamte Breite des Metallblechs 6, d.h. die Länge der Befüll- und Entleeröffnung 4 erstreckt. Wie in Fig. 2 angedeutet ist, ist das Stützprofil 20 bevorzugt an einem bevorzugt doppelwandigen Kragen 24 des Pressbehälters 2 befestigt, welcher die Befüll- und Entleeröffnung umgibt.

Um die an der in Schließrichtung nachlaufenden Seite des Metallblechs 6 befestigte zweite Profilstange 10b in der Schließstellung am Pressbehälter 2 mechanisch zu fixieren, umfassen die Haltemittel eine in Fig. 2 und 3 angedeutete Hakenleiste 16, deren Haken 17 in eine Vielzahl von benachbart im Abstand zueinander angeordneten Ausbrüche 14 eingreifen, die im Bereich der nachlaufenden zweiten Profilstange 10b in dem in Schließrichtung nachlaufenden Rand des Metallblechs 6 geformt sind, und bevorzugt von der zweiten Profilstange 10b begrenzt werden. Auf diese Weise ergibt sich im geschlossenen Zustand des Pressbehälters 2 eine unterbrochen formschlüssige Verbindung über die gesamte Breite des Deckels 3 hinweg. Die Haken 17 werden hierbei in die zugehörigen Ausbrüche oder Durchbrüche 14 von der Unterseite des Metallblechs 6 aus eingeführt, indem das nachlaufende Ende des Metallblechs 6 beim Verfahren desselben in die Schließstellung kurz vor dem Erreichen der Endposition über entsprechende Führungselemente 30 abgesenkt wird. Um die tangential wirkenden Spannkräfte zuverlässig von den an der Außenseite des Pressbehälters 2 befestigten Haken 17 in das Metallblech 6 einzuleiten, stützen sich die Haken 17 bevorzugt mit den Innenseiten ihrer vertikal verlaufenden Schenkel unmittelbar an der nachlaufenden Profilstange 10b ab, die bevorzugt mit den Enden eines jeden der zwischen den Ausbrüchen 14 angeordneten durchgängigen zungenartigen Verbindungsabschnitte 6a des Metallblechs 6 verschweißt ist.

Die in Fig. 1, 2 und 3 dargestellten Führungselemente 30, die einander gegenüberliegend beiderseits der Befüll- und Entleeröffnung angeordnet sind, umfassen weiterhin bevorzugt jeweils einen ersten in Schließrichtung vorlaufenden Führungsabschnitt 31.1 zum Führen der ersten vorlaufenden Profilstange 10a und einen sich an diesen anschließenden, die zweite Profilstange 10b führenden, zweiten nachlaufenden Führungsabschnitt 31.2 . Der erste Führungsabschnitt 31.1 ist gemäß der Darstellung von Fig. 3 in eine erste in Schließrichtung vorlaufende, radial zurückversetzte Führungsfläche 31.1a und eine zweite in Schließrichtung nachlaufende radial herausgestellte Führungsfläche 31.1b unterteilt, die wie dargestellt in vorteilhafter Weise als Flächen eines gemeinsamen Führungsschlitzes ausgeführt sind. Der zweite nachlaufende Führungsabschnitt 31.2 eines jeden der beiden Führungselemente 30 ist weiterhin bevorzugt in eine erste radial zurückgenommene, in Schließrichtung vorlaufende Führungsfläche 31.2a, an welcher die zweite Profilstange 10b geführt ist (Fig. 3), eine sich an diese anschließende zweite, radial herausgestellte mittlere Führungsfläche 31.2.b und eine sich an die zweite, radial herausgestellte mittlere Führungsfläche 31.2.b anschließende radial zurückgenommene nachlaufende Führungsfläche 31.2.c unterteilt.

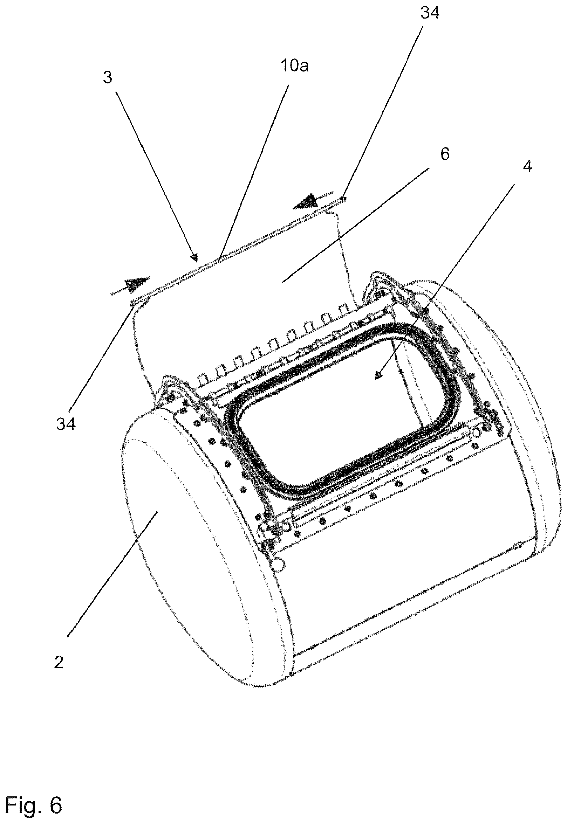

Wie in den Figuren 2 und 3 dargestellt, wird das Metallblech 6 mittels Gleitsteinen oder Rollen 34 entlang der Führungsflächen des ersten und zweiten Führungselements 30 geführt, die bevorzugt als Schlitzführungen ausgestaltet sind. Zudem ist es bevorzugt vorgesehen, dass das Metallblech 6 zu Reinigungszwecken manuell lösbar an den Führungselementen 30 aufgenommen ist. Dazu können die Gleitsteine und/oder Rollen 34, welche an der ersten vorlaufenden Profilstange 10a des Metallblechs 6 angeordnet sind, insbesondere im geöffneten Zustand des Metallblechs 6 manuell außer Eingriff mit den Führungsflächen gebracht werden, um das Metallblech 6 vom Behälter 2 abzuheben und/oder von diesem weg zu verschwenken, wie dies in Fig. 6 gezeigt ist. Auf diese Weise ist die Unterseite des Metallblechs 6 zu Reinigungszwecken leicht zugänglich.

In Figur 4 ist die der vorlaufenden ersten Profilstange 10a zugewandte Seite der Befüll- und Entleeröffnung 4 des Pressbehälters 2 mit dem dort an der Außenseite des Pressbehälters 2 aufgenommenen rotierbaren Klemmprofil 18 gezeigt, welches bevorzugt mittels einer Arretiereinrichtung 25 in der gezeigten Verriegelungsstellung des rotierbaren Klemmprofils 18 temporär fixiert werden kann. Die Arretiereinrichtung 25 kann hierzu beispielsweise einen federbelasteten Sperrbolzen 25a umfassen, dessen freies Ende sich in der Verriegelungsstellung des Klemmprofils 18, wie in Fig. 4 gezeigt, in den Bewegungsweg des mit dem Klemmprofil 18 verbundenen Spannhebels 29 hinein erstreckt und diesen gegen ein unbeabsichtigtes Verschwenken aus der in Fig. 4 gezeigten Verriegelungsstellung in die Freigabestellung sperrt.

Weiterhin kann es vorgesehen sein, dass an der Außenseite des Pressbehälters 2 ein orthogonal zur Längsachse des Klemmprofils 18 verschiebbarer, bevorzugt federbelasteter Rastbolzen 28 aufgenommen ist, welcher mit seinem einen Ende in eine in der Außenseite des Klemmprofils 18 geformte umfängliche Nut 18n eingreift, um das Klemmprofil 18 in Umfangsrichtung rotierbar und in der axialen Richtung ortsfest in den Haltebuchsen 15 zu fixieren. Durch Zurückziehen des Rastbolzens 28 ist es bei dieser Ausführungsform der Erfindung möglich, das gesamte Klemmprofil 18 axial aus den Haltebuchsen 15 herauszuziehen, oder in diese bis in die in Fig. 4 gezeigte Endstellung einzuführen. Dadurch kann das Klemmprofil 18 seitlich parallel zur Behälterlängsachse beispielsweise zu Reinigungszwecken entnommen werden.

An dem zuvor erwähnten Kragen 24 des Pressbehälters 2 ist in der bevorzugten Ausführungsform der Erfindung eine aufblasbare Dichtung 32 aufgenommen, welche in der Schließstellung nach dem Aufblasen der Dichtung an der Unterseite des Metallblechs a6 anliegt und den Innenraum des Pressbehälters 2 abdichtet, um einen Austritt von Pressgut beim Expandieren der im Inneren des Pressbehälters 2 angeordneten Pressmembran (nicht gezeigt) zu verhindern. Um die Dichtung 32 am Umfang des Pressbehälters 2 gegen eine Verschiebung zu sichern, umfasst der Kragen 24 bevorzugt zwei im Abstand der lichten Breite der Dichtung 32 parallel zueinander verlaufende Wände, die die Befüll- und Entleeröffnung 4 umsäumen und bevorzugt mit der Außenseite des Pressbehälters 2 verschweißt sind. Wie die Anmelderin in Versuchen erkennen konnte, sind die von den Haltemitteln erzeugten Spannkräfte bei der erfindungsgemäßen Konstruktion vollends ausreichend, das Metallblech 6 nach dem Expandieren der Dichtung 32, bzw. bei einer Beaufschlagung des Innenraums des Pressbehälters 2 mit einem üblichen Pressdruck von z.B. 1,2 bar bis 1,5 bar mit einer solchen Tangentialkraft über der Befüll- und Entleeröffnung 4 am Umfang des Pressbehälters 2 zu fixieren, dass ein Austritt von Pressgut infolge einer Deformation des Metallblechs 6 ausgeschlossen ist. Hierbei lässt sich der Innenraum des Pressbehälters 2 durch die mit z.B. 2,5 bar Überdruck beaufschlagte Dichtung 32, welche zwischen den beiden parallel verlaufenden Seitenwänden des Kragens aufgenommen ist, in überraschender Weise vollständig gegen einen Austritt von Flüssigkeit während des Pressvorgangs abdichten.

Die Haltemittel, bei der bevorzugten Ausführungsform die zuvor beschriebenen Profilstangen 10a, 10b, das Klemmprofil 18 sowie den mit diesem zusammenwirkenden Haltewinkel 12 und das Stützprofil 20 auf der vorlaufenden Seite und die in die Ausbrüche 14 eingreifenden Haken 17 der Hakenleiste 16 auf der nachlaufenden Seite des Metallblechs 6 umfassen, können diese Haltemittel auch durch anderen bekannte Bauteile verwirklicht sein. So kann anstelle des zuvor beschriebenen mechanisch besonders einfachen Klemmprofils 18 auch ein pneumatisch oder hydraulisch expandierbares Hohlprofil ähnlich der aufblasbaren Dichtung 32, oder auch eine Anordnung von Pneumatik- oder Hydraulikzylindern zum Einsatz gelangen, um die vorlaufende und/oder nachlaufende Kante des Metallblechs 6 am Umfang der Mantelfläche des Presszylinders zu fixieren und zu spannen. Ebenso kann durch eine Ausgestaltung des Klemmprofils 18 als ein in den Halterungen 15 exzentrisch gelagerter abgeflachter Stab gewünschten Falls eine Vorspannung auf die erste Profilstange 10a, bzw. auf das Blech 6 ausgeübt werden, welches diese auf dem Umfang des Pressbehälters 2 über der Befüll- und Entleeröffnung spannt, ohne dass die Dichtung 32 expandiert, bzw. Der Behälter 2 mit Druck beaufschlagt ist.

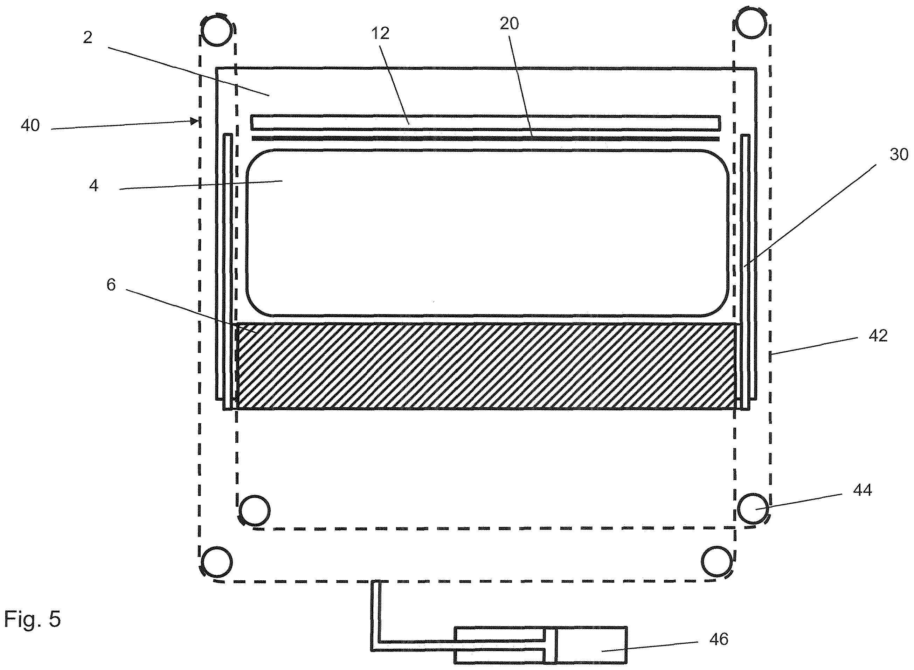

Figur 5 zeigt weiterhin eine schematische Darstellung des Pressbehälters 2 mit einem Verfahrmechanismus 40, mit dem das Metallblech 6 aus der Öffnungsstellung in die Schließstellung und umgekehrt verfahrbar ist. Der Verfahrmechanismus 40 umfasst hierzu ein wenigstens an einer der Seitenkanten des Metallblechs 6 befestigtes endloses Zugmittel 42. Dieses ist bevorzugt ein Seil, ein Riemen oder eine Kette. Das Zugmittel 42 ist über am Pressbehälter 2 aufgenommene Umlenkrollen 44 geführt, welche in der Darstellung von Figur 5 jedoch zum leichteren Verständnis der Funktionsweise des Verfahrmechanismus 40 als nicht direkt mit dem Pressbehälter 2 verbundene Rollen 44 eingezeichnet sind.

Der Verfahrmechanismus 40 kann ferner einen auf das endlose Zugmittel 42 wirkenden Antrieb 46 umfassen. Dieser kann beispielsweise ein Druckluftmotor sein, dessen Welle parallel zur Behälterlängsachse positioniert ist und das Metallblech 6 mittels des über die Umlenkrollen 44 geführten endlosen Zugmittels 42 in umfänglicher Richtung verfährt. Ein weiterer möglicher Antrieb 46 ist ein Pneumatik-Zylinder, der in Figur 5 schematisch angedeutet ist, und dessen Bewegungsachse bevorzugt parallel zur Behälterlängsachse positioniert ist und mittels eines über die Umlenkrollen 44 geführten Seilzugs das Metallblech 6 in umfänglicher Richtung aus der Schließposition in die Öffnungsposition verfährt. Hierbei wird das Metallblech 6 aufgrund des geringen Gewichts sowie durch die vorteilhafte Konstruktion des Verfahrmechanismus 40 während seiner Bewegung zwischen der Schließposition und Befüllposition stets in einer zu den Führungselementen 30 parallelen Stellung gehalten.

### Liste der Bezugszeichen

- 1: Vorrichtung
- 2: zylinderförmiger Pressbehälter
- 3: Deckel
- 4: Befüll- und Entleeröffnung
- 6: Blech
- 6a: Verbindungsabschnitte zwischen den Ausbrüchen
- 10a: erste Profilstange
- 10b: zweite Profilstange
- 12: Haltewinkel
- 12r: radial verlaufender Schenkel des Haltewinkels
- 12t: tangential verlaufender Schenkel des Haltewinkels
- 14: Ausbruch im Deckelblech
- 15: Haltebuchse
- 16: Hakenleiste
- 17: Haken
- 18: drehbar gelagertes Klemmprofil
- 18a: abgeflachter Abschnitt
- 18b: konvexer Abschnitt
- 18n: umfängliche Nut in Klemmprofil
- 20: Stützprofil
- 24: Kragen
- 25: Arretiereinrichtung
- 25a: Sperrbolzen
- 28: Rastbolzen
- 29: Spannhebel
- 30: Führungselement
- 31.1: vorlaufender Führungsabschnitt
- 31.1a: erste in Schließrichtung vorlaufende, radial zurückversetzte Führungsfläche
- 31.1b: zweite in Schließrichtung vorlaufende, radial herausgestellte Führungsfläche
- 31.2: nachlaufender Führungsabschnitt
- 31.2a: erste radial zurückgenommene in Schließrichtung vorlaufende Führungsfläche
- 31.2b: zweite radial herausgestellte mittlere Führungsfläche
- 31.2c: dritte radial zurückgenommene in Schließrichtung nachlaufende Führungsfläche
- 32: aufblasbare Dichtung
- 34: Gleitsteine / Rollen
- 40: Verfahrmechanismus
- 42: Zugmittel
- 44: Umlenkrollen
- 46: Antrieb

## Patentansprüche

1. Vorrichtung (1) zum Auspressen von flüssigkeitshaltigem Pressgut umfassend einen zylinderförmigen Pressbehälter (2) mit einer durch einen Deckel (3) verschließbaren Befüll- und Entleeröffnung (4), wobei der Deckel (3) in Umfangsrichtung des Pressbehälters (2) betrachtet aus einer geöffneten Stellung in eine Schließstellung bewegbar ist, in der die Befüll- und Entleeröffnung (4) vom Deckel (3) bedeckt ist
**dadurch gekennzeichnet, dass**
der Deckel (3) ein der Krümmung des Pressbehälters (2) von der Form her angepasstes, gewölbtes Metallblech (6) ist, das an seiner in Schließrichtung vorlaufenden Kante mit einer ersten Profilstange (10a) und an seiner in Schließrichtung nachlaufenden Kante mit einer zweiten Profilstange (10b) verbunden ist, die sich quer zur Bewegungsrichtung des Deckels (3) erstrecken, und dass an der Außenseite des Pressbehälters (2) Haltemittel (12, 14, 16, 18, 20) angeordnet sind, durch die die erste und zweite Profilstange (10a, 10b) in der Schließstellung mit einer in tangentialer Richtung wirkenden Haltekraft beaufschlagbar sind.

2. Vorrichtung nach Anspruch 1,
**dadurch gekennzeichnet, dass**
das Metallblech (6) ein rundgewalztes Stahlblech ist, welches eine der Wandstärke des Pressbehälters (2) entsprechende Dicke besitzt.

3. Vorrichtung nach Anspruch 1 oder 2,
**dadurch gekennzeichnet, dass**
die Haltemittel (12, 14, 16, 18, 20) in der Schließstellung formschlüssig mit der in der Schließrichtung vor- und/oder nachlaufenden Kante des Metallblechs (6) in Eingriff bringbar sind.

4. Vorrichtung nach einem der vorhergehenden Ansprüche,
**dadurch gekennzeichnet, dass**
die erste Profilstange (10a) in der Schließstellung des Deckels (3) in einem Haltewinkel (12) aufnehmbar ist, derart, dass sich diese über ihre gesamte Länge hinweg formschlüssig am Haltewinkel (12) abstützt.

5. Vorrichtung nach einem der vorhergehenden Ansprüche,
**dadurch gekennzeichnet, dass**
im Metallblech (6) eine Vielzahl von reihenförmig im Abstand zueinander angeordneten Ausbrüchen (14) geformt ist, in die zur Einleitung der Spannkraft den jeweiligen Ausbrüchen (14) zugeordnete Haken (17) formschlüssig eingreifen, welche an einer sich parallel zur nachlaufenden Kante des Metallblechs (6) ersteckenden, am Pressbehälter (2) aufgenommenen Hakenleiste (16) angeordnet sind.

6. Vorrichtung nach einem der vorhergehenden Ansprüche,
**dadurch gekennzeichnet, dass**
dem Haltewinkel (12) gegenüberliegend ein drehbar gelagertes stabförmiges Klemmprofil (18) mit einer sich über dessen Länge erstreckenden abgeflachten Klemmfläche angeordnet ist, insbesondere ein abgeflachter Rundstab, welches manuell oder motorisch rotierbar ist, um die erste Profilstange (10a) in der Schließstellung gegen den Haltewinkel (12) zu drücken.

7. Vorrichtung nach Anspruch 6,
**dadurch gekennzeichnet, dass**
am Pressbehälter (2) um die Befüll- und Entleeröffnung (4) herum ein Kragen (24) angeordnet ist, und dass sich das Klemmprofil (18) in der Schließstellung bevorzugt über die gesamte Länge der Deckelöffnung hinweg an einem Stütz-Profil (20) abstützt, welches insbesondere an dem Kragen (24) aufgenommen ist, um die auftretenden Tangentialkräfte beim Spannen des Metallblechs (6) in den Mantel des Pressbehälters (2) einzuleiten.

8. Vorrichtung nach Anspruch 7,
**dadurch gekennzeichnet, dass**
das Klemmprofil (18) mittels eines Rastbolzens (28) und/oder eines Hebels seitlich parallel zur Behälterlängsachse entnehmbar ist.

9. Vorrichtung nach einem der vorhergehenden Ansprüche,
**dadurch gekennzeichnet, dass**
die Endabschnitte der ersten und/oder zweiten Profilstange (10a, 10b) beim Verschieben des Deckels (3) in die Schließstellung durch ein erstes und zweites beiderseits der Befüll- und Entleeröffnung (4) angeordnetes Führungselement (30) geführt werden, wobei jedes der beiden Führungselemente (30) einen ersten vorlaufenden Führungsabschnitt (31.1) zum Führen der ersten vorlaufenden Profilstange (10a) und einen sich an diesen anschließenden, die zweite Profilstange (10b) führenden, zweiten nachlaufenden Führungsabschnitt (31.2) besitzt, wobei der erste Führungsabschnitt (31.1) eine erste in Schließrichtung vorlaufende, radial zurück versetzte Führungsfläche (31.1a) und eine zweite in Schließrichtung nachlaufende radial herausgestellte Führungsfläche (31.1b) besitzt, und der zweite nachlaufende Führungsabschnitt (31.2) eines jeden Führungselements (30) eine erste radial zurückgenommene in Schließrichtung vorlaufende Führungsfläche (31.2a), eine sich an diese anschließende zweite, radial herausgestellte mittlere Führungsfläche (31.2b) und eine sich an die zweite, radial herausgestellte mittlere Führungsfläche (31.2b) anschließende radial zurückgenommene nachlaufende Führungsfläche (31.2c) besitzt.

10. Vorrichtung nach Anspruch 9,
**dadurch gekennzeichnet, dass**
der Deckel (3) mittels Gleitsteinen und/oder Rollen (34) entlang der Führungsflächen (30) geführt wird.

11. Vorrichtung nach Anspruch 10,
**dadurch gekennzeichnet, dass**
die erste und/oder zweite Profilstange (10a, 10b) zu Reinigungszwecken manuell lösbar an den Führungselementen (30) aufgenommen ist, wobei wenigstens die Gleitsteine und/oder Rollen (34), welche an der in Schließrichtung liegenden Seite des Metallblechs (6) liegenden Profilstange (10a) angeordnet sind, insbesondere im geöffneten Zustand des Deckels (3) manuell außer Eingriff mit den Führungsflächen bringbar sind, um das Metallblech (6) mit der daran befestigten ersten Profilstange (10a) vom Behälter (2) abzuheben und/oder von diesem weg zu verschwenken.

12. Vorrichtung nach einem der Ansprüche 7 bis 11,
**dadurch gekennzeichnet, dass**
an der Außenseite des Pressbehälters (2) eine aufblasbare Dichtung (32) angeordnet ist, welche im aufgeblasenen Zustand an die Unterseite des Metallblechs (6) anlegbar ist, um das Metallblech (6) am Umfang des Pressbehälters in der Schließstellung zu spannen und den Innenraum des Pressbehälters (2) gegen einen Austritt von Pressgut abzudichten.

13. Vorrichtung nach einem der vorhergehenden Ansprüche,
**dadurch gekennzeichnet, dass**
diese einen Verfahrmechanismus (40) zum Verfahren des Deckels (3) besitzt, der ein an den in Umfangsrichtung verlaufenden Seiten des Metallblechs (6) befestigtes endloses Zugmittel (42) umfasst, insbesondere ein Seil, einen Riemen oder eine Kette, welches über am Pressbehälter (2) aufgenommene Umlenkrollen (44) geführt ist.

14. Vorrichtung nach Anspruch 13,
**dadurch gekennzeichnet, dass**
der Verfahrmechanismus (40) einen auf das endlose Zugmittel (42) wirkenden Antrieb (46) umfasst, insbesondere einen Druckluftmotor oder einen Pneumatikmotor, mittels welchem das Zugmittel (42) über die Umlenkrollen (44) bewegbar ist, um das mit diesem mechanisch gekoppelte Metallblech (6) aus der Schließposition in die Öffnungsposition zu verfahren.
